# EUROPÄISCHE PATENTSCHRIFT

(11) **EP 2 576 929 B1**
(45) Veröffentlichungstag und Bekanntmachung des Hinweises auf die Patenterteilung: **30.07.2014**
(21) Anmeldenummer: 10781633.2
(22) Anmeldetag: 05.11.2010
(51) Int. Cl.: E04B 1/76

(54) **DÄMMUNG UND HERSTELLUNGSVERFAHREN**
INSULATION AND METHOD OF MANUFACTURE
ISOLANT ET PROCEDE POUR SA FABRICATION

(30) Priorität: 31.05.2010 DE 102010029513
(43) Veröffentlichungstag der Anmeldung: 10.04.2013
(73) Patentinhaber: Wacker Chemie AG, 81737 München (DE)
(72) Erfinder: SZILLAT, Holger, 01612 Nünchritz (DE)
(74) Vertreter: Fritz, Helmut
(86) Internationale Anmeldenummer: PCT/EP2010/066950
(87) Internationale Veröffentlichungsnummer: WO 2011/150987

(56) Entgegenhaltungen:
- DE-A1- 4 432 896
- DE-A1-102004 031 967
- DE-A1-102006 048 850
- FR-A1- 2 339 038
- US-A- 4 122 203

## Beschreibung

Die Erfindung betrifft eine Wärmedämm-Pulvermischung und ein Verfahren zur ihrer Herstellung.

Die Wärmedämmung zur Einsparung von Energie hat im Rahmen des Bewusstwerdens für nachhaltige Entwicklung und der Verteuerung von Energien einen hohen Stellenwert erhalten. Der Wärmedämmung kommt vor dem Hintergrund steigender Energiepreise bei knapper werdenden Ressourcen, dem Streben nach einer Reduzierung des CO2-Ausstosses, der Notwendigkeit nachhaltiger Reduzierung des Energiebedarfes sowie auch zukünftig noch steigenden Anforderungen an den Wärme- und Kälteschutz eine immer höhere Bedeutung zu. Diese steigenden Anforderungen an eine Optimierung des Wärmedämmschutzes gelten im gleichen Maß sowohl bei Gebäuden, z.B. für Neubauten oder für Bauten im Bestand, als auch für Kälteisolierungen im mobilen, logistischen und im stationären Bereich.

Baustoffe wie Stahl, Beton, Ziegelwerk und Glas, aber auch Natursteine sind relativ gute Wärmeleiter, so dass die daraus errichteten Außenwände von Gebäuden bei kalter Witterung sehr schnell die Wärme von der Innenseite an die Außenseite abgeben.

Die Entwicklung zielt daher zum einen auf eine Verbesserung der Isolationseigenschaften durch Steigerung der Porosität dieser Baustoffmaterialien, wie z.B. bei Beton und Ziegelwerk, und zum anderen auf eine Verkleidung der Außenwände mit Wärmedämmstoffmaterialien ab.

Die heute vornehmlich verwendeten Wärmedämm- bzw. Isolierstoffe sind Materialien mit geringer Wärmeleistung. Gebräuchlich sind: Organische Wärmedämmstoffe: Geschäumte Kunststoffe wie Polystyrol, Neopor, Polyurethan; Holzfaserwerkstoff wie Holzwolle und Kork; pflanzliche oder tierische Fasern wie z.B. Hanf, Flachs, Wolle.

Anorganische Wärmedämmstoffe: Mineral- und Glaswolle; Schaumglas in Plattenform; Kalzium-Silikat- und Gipsplatten; mineralische Schäume wie Porenbeton, Bimsstein, Perlite und Vermiculite.

Diese aufgeführten herkömmlichen Wärmedämmstoffe werden vornehmlich in Form von geschäumten oder verpressten Platten und Formkörpern eingesetzt. So ist z.B. möglich, Polyurethane und Polystyrole direkt in die Hohlräume der Bausteine einzuschäumen (DE8504737) oder nach DE10229856 als Maßplatten einzuführen. Nach DE10217548 ist diese Technologie auch mit Mineralwollzuschnitten möglich.

Alle diese Dämmungsausführungen haben für die heute geforderten hohen Ansprüche eine zu geringe Wärmedämmungseffektivität. Die Wärmeleitzahlen liegen durchgehend über 0,030 W/mK, haben daher einen hohen Raumbedarf und sind unter anderem in der Wärmedämmung nicht nachhaltig stabil.
Weitere Nachteile sind:
- Zu hohe Feuchtigkeitsaufnahme und Empfindlichkeit gegenüber Wasser.
- Zeit-und kostenaufwendige Anbringung an die Fassade (z.B. Kleben, Dübeln, Schrauben, Anbringen von Trägersystemen usw.; hierbei sind Wärmebrücken zum Teil vorprogrammiert).
- Zusätzliche Verbundschichten z.B. zur Haftung von Verputzen.
- Bei organischen Isolierschichten kommt die Brennbarkeit hinzu.

DE 44 32 896 offenbart einen evakuierten und in einer Hülle gasdicht eingeschlossenen, wärmedämmenden Formkörper auf der Basis von verpresstem und gegebenenfalls gehärteten, mikroporösen Isoliermaterial, das mindestens eine Kieselsäure und Fasermaterial enthält, sowie dessen Verwendung zur Isolierung von Hochtemperaturbatterien und Latentwärmespeichern. Da die eingesetzten Rohstoffe anorganisch und hydrophil sind und kein Mittel zur Hydrophobierung eingesetzt wird, wird ein hydrophiler Formkörper in einer nicht atmungsaktiven Hülle eingeschlossen.

Sehr gute Isolierwirkung zeigen sogenannte Vakuumisolationspaneele, kurz VIP genannt. Mit einer Wärmeleitfähgikeit von etwa 0,004 bis 0,008 W/mK (je nach Kernmaterial und Unterdruck) weisen die Vakuumisolationspaneele eine 8 bis 25 mal bessere Wärmedämmwirkung wie konventionelle Wärmedämmsysteme auf. Sie ermöglichen daher schlanke Konstruktionen mit optimaler Wärmedämmung, die sowohl im Baubereich als auch im Haushaltsgeräte-, Kühl- und Logistikbereich eingesetzt werden können. Vakuumisolationspaneele auf Basis poröser Wärmedämmstoffe, Polyurethanschaumplatten und gepresster Fasern als Kernmaterial mit Verbundfolien (z.B. Aluminiumverbundfolien bzw. sog. Metallisierten) sind im allgemein bekannt und hinlänglich beschrieben (vgl. hierzu VIP-Bau.de).

Beispielsweise beansprucht DE 10 2004 031967 ein Verfahren zur Herstellung eines Vakuumisolationsformkörpers, dessen Verwendung in Transportbehältern, Kühlschränken und flächigen Anwendungen, sowie Behälter, die diesen Vakuumisolationsformkörper enthalten. Die anorganischen und hydrophilen Rohstoffe aus mikroporösem Material werden innig miteinander vermischt, in eine Umhüllung eingebracht und nach Evakuieren luftdicht eingeschweißt. Es wird kein Hydrophobierungsmittel eingesetzt, so dass das Einschließen eines hydrophilen Formkörpers in eine nicht atmungsaktive Hülle beschrieben ist.

Die VIP-Technologie weist aber folgende Nachteile auf:
Wenn diese evakuierten Paneele durch Beschädigungen belüftet werden, so bedeutet dies das Ende der sehr guten Wärmedämmung. Die Isolierwirkung entspricht dann nur mehr der der eingesetzten Kernmaterialien.
Die Lebensdauer ist durch die Diffusion von Gasen durch die Barriere bzw. Hülle in die Vakuumpaneele zeitlich begrenzt. Für den Bausektor gelten speziell noch folgende Nachteile:
- Durch die notwendigen, nahezu gasundurchlässigen Barrieren sind die Paneele nicht atmungsaktiv.
- Handling und Verarbeitbarkeit vor Ort insbesondere auf Baustellen sind schwierig bzw. nicht möglich.
- Aufgrund des Aufbaus der Folien ist eine Diffusion von Umgebungsgasen (hauptsächlich Stickstoff, Sauerstoff, CO2 und Wasserdampf) immer gegeben. Eine längere Lebensdauer ist somit nicht gegeben und vielmehr endlich.
- Vakuumisolationspaneele sind, verglichen mit herkömmlichen Dämmstoffmaterialien, sehr teuer.

Niedrige Wärmeleitzahlen weisen poröse Wärmedämmstoffe z.B. auf Basis von pyrogener Kieselsäure auf (0,018 - 0,024 W/mK). Pyrogene Kieselsäuren werden durch Flammenhydrolyse von flüchtigen Siliziumverbindungen wie z.B. organischen und anorganischen Chlorsilanen hergestellt. Diese so hergestellten pyrogenen Kieselsäuren weisen eine hohe poröse Struktur auf und sind hydrophil.

Die Nachteile dieser porösen Wärmedämmstoffe auf Basis pyrogener Kieselsäuren sind:
● Hohe Feuchtigkeitsaufnahme, damit steigende Wärmeleitzahlen und somit Nachlassen der Wärmedämmeigenschaften.
● Im Bausektor kann dies zusätzlich zu Schimmelbildung führen.
● Bei Verwendung in Vakuumpaneelen kann durch die Feuchtigkeitsaufnahme ein Energietransport über Wassermoleküle stattfinden, welcher die Wärmeleitfähigkeit des Systems negativ beeinflussen kann. Auf der warmen Seite verdampfen Wassermoleküle, die auf der kalten Seite kondensieren. Dadurch werden große Energiemengen transportiert und somit die Wärmeleitfähigkeit des Systems angehoben.

Der Erfindung liegt die Aufgabe zu Grunde, die Probleme des Standes der Technik zu lösen, insbesondere die Eigenschaften von Wärmedämmstoffen wesentlich zu verbessern. Das konkrete Ziel der Erfindung ist eine kostengünstige, atmungsaktive, mechanisch stabile und hochwirksame Wärmedämmung mit geringer Feuchtigkeitsaufnahme.

Die Aufgabe wird durch die Merkmale der Ansprüche gelöst.

Gegenstand der Erfindung ist eine Wärmedämm-Pulvermischung, die eine Schüttdichte nach DIN ISO 697 und EN ISO 60 von 20 - 60 g/l aufweist und die mindestens eine Kieselsäure mit einer BET-Oberfläche nach DIN ISO 9277 von vorzugsweise 130 - 1200 m²/g bevorzugt 150 - 1000 m²/g, besonders bevorzugt 200 - 600 m²/g und mit einem D(50)-Wert vorzugsweise unter 60 µm bevorzugt unter 30 µm, besonders bevorzugt unter 15 µm und mindestens ein Fasermaterial mit einem Faserdurchmesser von vorzugsweise 1 - 50 µm enthält.

Bei der Kieselsäure handelt es sich vorzugsweise um Fällungskieselsäure, Kieselsäure mit Aerogelstruktur und bevorzugt pyrogene Kieselsäure.

Die erfindungsgemäße Wärmedämm-Pulvermischung weist vorzugsweise mindestens 15 Gew.-% bevorzugt mindestens 20 Gew.-%, besonders bevorzugt mindestens 25 Gew.-% vorzugsweise einer hydrophoben Kieselsäure mit einem Kohlenstoff-Anteil von vorzugsweise mindestens 1 Gew.-% bevorzugt mindestens 4 Gew.-%., besonders bevorzugt mindestens 7 Gew.-% auf.

Vorzugsweise weist die erfindungsgemäße Wärmedämm-Pulvermischung mindestens ein Hydrophobierungsmittel aus der Reihe Silikonharz, Fluorcarbonverbindung und Kohlenstoff in einer Menge von vorzugsweise 0,5 - 50 Gew.-%, bevorzugt 1 - 30 Gew.-%, besonders bevorzugt 2 - 15 Gew.-% auf.

Vorzugsweise weist die erfindungsgemäße Wärmedämm-Pulvermischung einen IR-Trüber auf.

Die erfindungsgemäße Wärmedämm-Pulvermischung weist eine Schüttdichte nach DIN ISO 697 und EN ISO 60 von vorzugsweise 2 - 150 g/l, bevorzugt 20 - 90 g/l, besonders bevorzugt 20 - 60, ganz besonders bevorzugt 20 - 40 g/l auf.

Vorzugsweise weist die Wärmedämm-Pulvermischung geschäumte oder geblähte Pulver auf in Menge von bis zu 60 Gew.%, bevorzugt bis zu 50 Gew.%, besonders bevorzugt bis zu 40 Gew.% auf. Bei den geschäumten oder geblähten Pulvern handelt es sich vorzugsweise um geblähten Perlit, ein Aluminiumsilikat, Blähglimmer (Vermiculit), Blähton, Keramikschaum, der meist aus Aluminiumoxyd und schaumbildenen Bestandteilen hergestellt wird, Silikatschaum, der meist aus Quarzmehl, Kalkhydrat, Zement, Wasser und Schäummittel hergestellt wird, Gipsschaum, Schaumglas, Blähglas (ein Baustoff aus recyceltem Altglas), geschäumtes Polystyrol [Je nach Herstellungsart wird zwischen dem normal weißen und eher grobporigen EPS, z. B. Styropor (BASF), und dem feinporigeren XPS, z. B. Styrodur (BASF, Farbe grün), Austrotherm *XPS* (Farbe rosa) oder Styrofoam (Dow Chemical, Farbe blau), sowie Neopor (ein weiterentwickelter Schaumstoff auf Basis von Schaumpolystyrol) unterschieden.] und Resol-Hartschaum, bevorzugt geblähter Perlit, Blähglimmer, Schaumglas, geschäumtes Polystyrol und Resol-Hartschaum, besonders bevorzugt geblähter Perlit, geschäumtes Polystyrol und Resol-Hartschaum.

Die Aufgabe wird bevorzugt durch eine Wärmedämmung mit Schichtaufbau erreicht, wobei Schichten aus konventionellen Wärmedämmstoffen (im weiteren Verlauf als konventionelle Dämmschichten bezeichnet) mit Schichten aus neuen Wärmedämmstoffformulierungen (im weiteren Verlauf als neue Dämmschichten bezeichnet) kombiniert werden. Den Schichtaufbau zeichnet ein guter Zusammenhalt aller Komponenten und Schichten und eine mechanische Bearbeitbarkeit bei gleichzeitig geringer Dichte aus. Die hohe Wärmedämm-Performance des Schichtaufbaus stellt ein weiteres Charakteristikum dar und rundet das Eigenschaftspektrum der neuen Wärmedämmung ab. Auf den Einsatz von zwischen den Schichten befindlichen Klebern, die die Wärmeleitfähigkeit erhöhen würden, kann verzichtet werden.

Als konventionelle Wärmedämmschichten kommen vorzugsweise in Frage:
- Schüttung eines geschäumten oder geblähten anorganischen Materials, wie vorzugsweise Perlite, Vermiculit, Blähton oder Blähglimmer, der durch einen Binder zusammengehalten wird.
- Organische Dämmstoffplatte, wie vorzugsweise geschäumtes Polystyrol, Neopor, Resol oder Polyurethan.
- Dämmstoffplatte aus anorganischem, porösem Dämmmaterial, wie vorzugsweise pyrogener Kieselsäure, versetzt vorzugsweise mit IR-Trübungsmittel und Glasfaser.
- Faservlies oder Fasermatte mit oder ohne Imprägnierung mit Kieselsäure.

Diesem konventionellen Dämmstoff kommt in erster Linie die Aufgabe zu, eine chemische Verträglichkeit mit konventionellen Elementen einer Wärmedämmfassade, wie einem Dämmziegel, oder mit einem Klebemörtel und Putz eines Wärmedämmverbundsystems sicher zu stellen.

Hierdurch wird auch eine ausreichende Stabilität gegen Witterungseinflüsse, wie Schlagregen, erreicht. Es reicht jedoch nicht aus, dass einzelne Komponenten gegen Schlagregen resistent sind, da Dämmstoffe am Bau gegebenenfalls beliebig auf ein für das individuelle zu dämmende Gebäude passendes Maß zugeschnitten werden. Damit kann eine zwischen den konventionellen Dämmstoffen befindliche neue Wärmedämmstoffformulierung mit Funktion einer Kerndämmung partiell gegen Witterungseinflüsse freigelegt werden kann. Dies ist insbesondere dann kritisch, wenn es sich bei der Hauptkomponente der Kerndämmung um Kieselsäure handelt. Kieselsäure hat im unbehandelten Zustand eine hohe Affinität zu Feuchte. Der Mechanismus der Feuchteaufnahme gestaltet sich, wie folgt: In einem ersten Schritt wird die Feuchte physisorbiert. Die Physisorption von Wasser auf den Silanolgruppen der Kieselsäure ist bei Raumtemperatur reversibel. In einem zweiten Schritt erfolgt die Chemisorption von Feuchte. Dieser Schritt ist bei Raumtemperatur irreversibel. Bei signifikantem Feuchteeintrag kann die Struktur der Kieselsäure zerstört werden. Man spricht von einem Kollaps der Struktur, der mit einer drastischen Erhöhung Wärmeleitfähigkeit des Dämmmaterials verbunden ist.

Dies stellt besondere Anforderungen an sämtliche Schichten der neuen Wärmedämmsystems. Eine ausgeprägte Hydrophobie ist in allen Schichten zwingend erforderlich.

Schichten zwischen den konventionellen Dämmschichten werden im folgenden als neue Dämmschichten bezeichnet und sind gemäß der Erfindung dadurch gekennzeichnet, dass sie mindestens ein Pulver aus der Reihe pyrogene Kieselsäure, Fällungskieselsäure und Kieselsäure mit Aerogelstruktur enthalten. Die BET-Oberfläche dieser Kieselsäuren liegt vorzugsweise zwischen 130 m²/g und 1200 m2/g. Die Kieselsäure-Pulver können auch kombiniert eingesetzt werden. Der Gewichtsanteil der Kieselsäuren in der neuen Dämmschicht beträgt vorzugsweise 30 - 99 Gew. %, bevorzugt 50 - 97 Gew. %, ganz besonders bevorzugt 60 - 95 Gew. %. Ohne Oberflächenbehandlung spricht man von einer hydrophilen Kieselsäure.

Ein Teil der Kieselsäuren in der neuen Wärmedämm-Pulvermischung und der neuen Dämmschicht ist bevorzugt oberflächenmodifiziert. Die Oberflächenbehandlung kann auf der Kieselsäure adsorbiert sein oder kann partiell oder vollständig mit den Silanolgruppen der Kieselsäure reagiert haben. Eine bevorzugte Oberflächenbehandlung enthält vorzugsweise Hexamethyldisilazan, Polydimethylsiloxan (PDMS) oder Alkylsilane. Besonders bevorzugt führt die Oberflächenbehandlung zu einem Kohlenstoff-Anteil von mindestens 4 Gew.-% in der Kieselsäure. Im Fall einer Oberflächenbehandlung spricht man von einer hydrophoben Kieselsäure. Es können auch Kombinationen aus hydrophilen und hydrophoben Kieselsäuren zum Einsatz kommen. Das Mengenverhältnis aus hydrophoben Kieselsäuren und hydrophilen Kieselsäuren beträgt vorzugsweise in Gew.-% mindestens 1 zu 4.5, bevorzugt mindestens 1 zu 4. Der Anteil an hydrophober Kieselsäure in der neuen Dämmschicht beträgt mindestens 15 Gew.-%. Ganz besonders bevorzugt handelt es sich bei der hydrophoben Kieselsäure um eine hydrophobe pyrogene Kieselsäure.

Ferner enthalten die neuen Wärmedämm-Pulvermischung und die neuen Dämmschichten vorzugsweise mindestens ein Fasermaterial. Hier kommen z.B. vorzugsweise Glaswolle, Steinwolle, Basaltwolle, Schlackenwolle, keramische Fasern, Kohlefasern, Silica-Fasern, Cellulosefasern, Textilfasern und Kunststofffasern, wie Polypropylen-, Polyamid- oder Polyesterfasern, in Frage. Das Fasermaterial kann auch oberflächenmodifiziert sein, z.B. kann sie eine organische Schlichte oder eine andere Modifizierung, wie Polydimethysiloxan (PDMS), enthalten. Ein bevorzugter Faserdurchmesser liegt bei vorzugsweise 0,1 µm bis 200 µm, besonders bevorzugt bei 1 - 50 µm, ganz besonders bevorzugt zwischen 3 und 10 µm, wobei die Länge vorzugsweise 1-25 mm, bevorzugt 3 - 10 mm beträgt. Die Fasermaterial-Menge beträgt vorzugsweise 0,5 - 20 Gew. %, bevorzugt 1-10 Gew. %, ganz besonders bevorzugt 2-6%.
Bevorzugte Fasersorten sind Glasfasern, Silica-Fasern und Cellulosefasern. Besonders bevorzugt sind Cellulosefasern.

Die dritte Komponente der neuen Wärmedämm-Pulvermischung und der neuen Dämmschicht ist vorzugsweise ein hydrophobierendes Pulver, gekennzeichnet dadurch, dass es bei wärmer gleich -30°C noch fest ist. Geeignet sind Pulver mit hydrophober Wirkung gegenüber Wasser, z.B. vorzugsweise Silikonharze (z.B. Polymethylsiloxane oder Polyalkylphenylsiloxane und deren Copolymerisate mit Alkyd-, Acryl- oder Polyesterharzen oder Polyethern), Polyfluorcarbonverbindungen, Acrylharze, oligomere Siloxane, Organosilane, Kieselsäureester oder Silikate mit hydrophobierenden Zusätzen, Siliconate, Stearate, Paraffine, Fettsäuren, Fettsäureester, Wachsester, Ceresine, Bitumen, Alkydharze, Acrylat-Copolymere (z.B. auch Organosilicium-Acrylat-Copolymere), Styrol-Copolymere (z.B. Butadien-Styrol-Copolymere oder carboxylierte Butadien-Styrol-Copolymere), Polyvinylacetat, Polyvinylpropionat, Polystyrolacrylate, Vinylchlorid-Copolymere, Vinylacetat-Copolymere, Vinylterpolymere, Polyolefine, Ethylen-Copolymere, Propylen-Copolymere, thermoplastische Polymere und Polymerblends (z.B. aus Polyethylen oder Polypropylen und Ethylen/Vinylacetat- oder Ethylen/Acrylat-Copolymeren, gegebenenfalls Silan-vernetzt zur Erhöhung der Erweichungstemperatur) und Kohlenstoff. Die genannten Hydrophobierungsmittel können einzeln oder in Kombination eingesetzt werden.

Um einen Festkörper in Form eines Pulvers zu erhalten, ist es bei manchen der genannten Hydrophobierungsmittel, wie oligomere Siloxane und Organosilane, erforderlich, dass diese auf bis zu -30°C abgekühlt werden.

Bevorzugte Hydrophobierungsmittel unter den genannten sind vorzugsweise Silikonharze, Polyfluorcarbonverbindungen, Acrylharze, Stearate, Wachsester, Alkydharze, Acrylat-Copolymere, Polyvinylacetat, Vinylchlorid-Copolymere, Vinylacetat-Copolymere und Vinylterpolymere und Kohlenstoff. Besonders bevorzugt sind Silikonharze, Polyfluorcarbonverbindungen und Kohlenstoff. Unter den Silikonharzen, Polyfluorcarbonverbindungen und Kohlenstoff sind bevorzugt Polyalkylsiliconharze, Polyphenylsiliconharze, Polytetrafluorethylene (PTFE), Tetrafluoroethylen Perfluoromethylvinylether Copolymer(MFA), Perfluorethylenpropylen (FEP), Perfluoralkoxy-Polymere (PFA), Copolymere aus Ethen und Tetrafluorethen mit der Formel ~CH₂-CH₂-CF₂-CF₂~ (ETFE), Copolymere von Ethylen, Tetrafluoroethylen und Hexafluoropropylen (EFEP), Polyvinylfluorid (PVF), Polyvinylidenfluoride (PVDF), Polychlortrifluorethylene (PCTFE) und Graphit.

Bei den Polyfluorcarbonverbindungen sind besonders bevorzugt PTFE und PVDF.

Die hydrophobierenden Pulver haben eine Korngröße von vorzugsweise kleiner 1 mm, bevorzugt kleiner 500 µm, besonders bevorzugt kleiner 200 µm, ganz besonders bevorzugt kleiner 80 µm.

Bevorzugt liegt der Erweichungspunkt des hydrophobierenden Pulvers zwischen vorzugsweise -30°C und 600°C, bevorzugt zwischen 20°C und 450°C, besonders bevorzugt zwischen 40°C und 370°C. Die Pulver können einzeln oder in Kombination eingesetzt werden. Die Menge des hydrophobierenden Pulvers in der neuen Dämmschicht beträgt vorzugsweise 0,5 - 50 Gew. %, bevorzugt 1 - 30 Gew. %, besonders bevorzugt 2-15 Gew. %.

Vorzugsweise wird der neuen Wärmedämm-Pulvermischung und der neuen Dämmschicht noch ein IR-Trübungsmittel hinzu gesetzt. In Frage kommen z.B. C, SiC, Ilmenit, Zirkonsilikat, Eisenoxid, TiO₂, ZrO₂, Manganoxid, Eisentitanat. Die Korngröße dieser Pulver liegt vorzugsweise zwischen 100 nm und 100 µm, bevorzugt zwischen 0,5 µm und 15 µm, besonders bevorzugt zwischen 1 und 10 µm. Die Menge beträgt vorzugsweise 1 - 40 Gew.-%, bevorzugt 2 - 30 Gew.-%, besonders bevorzugt 3 - 8 Gew.-%.

Der neuen Wärmedämm-Pulvermischung und neuen Dämmschicht können vorzugsweise weitere Oxide hinzugesetzt werden, die auch hydrophobiert sein können. Einsetzbar sind u.a. vorzugsweise Erdalkalioxide, Silikate, spezielle Schichtsilikate, und Kieselsäuren. Hierunter fallen vorzugsweise verschiedene, synthetisch hergestellte Modifikationen von Siliziumdioxid wie z.B. Lichtbogenkieselsäuren, Kieselsäuren aus Rückstandsverbrennungsanlagen und Silica Fume, aber auch Kieselsäuren, die durch Auslaugen von Silikaten wie Calziumsilikat, Magnesiumsilikat und Mischsilikaten wie z.B. Olivin (Magensium-Eisensilikat) mit Säuren hergestellt werden. Ferner kommen zum Einsatz natürlich vorkommende SiO₂-haltige Verbindungen wie Diatomerden und Kieselgure. Je nach Bedarf können feinteilige Metalloxide wie Aluminiumoxid, Titandioxid, Eisenoxid zugesetzt werden. Die eingesetzte Menge kann bis zu 50 Gew.-% betragen.

Ein weiterer Zusatz der neuen Wärmedämm-Pulvermischung und neuen Dämmschicht kann aus vorzugsweise einem oder mehreren geschäumten oder geblähten Pulvern bestehen, wie vorzugsweise Perlite, Vermiculit, Blähton, Blähglimmer, Polystyrol, Neopor oder Polyurethan. Um eine geringe Dichte zu erzielen, erfolgt das Aufschäumen vorzugsweise nach der Formgebung der neuen Dämmstoffformulierung. Die eingesetzte Menge kann bis zu 60 Gew.-% betragen.

Zur Erreichung einer geringen Dichte können auch vorzugsweise klassische Porenbildner, wie vorzugsweise Cellulose und deren Derivate, zum Einsatz kommen.

Die Dichte der neuen Dämmschicht kann vorzugsweise zwischen 30 und 500 g/l betragen. Im Sinne der Wirtschaftlichkeit der Dämmung ist es zielführend, möglichst geringe Dichten einzusetzen. Überraschenderweise wurde festgestellt, dass die neue Dämmschicht auch bei geringer Dichte eine hohe Festigkeit aufweist. Eine bevorzugte Dichte im Sinne der Erfindung beträgt vorzugsweise zwischen 30 und 150 g/l, besonders bevorzugt zwischen 70 und 120 g/l.

Eine weitere Besonderheit ist, dass im Unterschied zu bisherigen Erfahrungen trotz der geringen Dichte keine Abstriche in der Wärmedämmeffizienz gemacht werden müssen. Es ist z.B. bekannt, dass Dämmungen auf Basis von pyrogener Kieselsäure mit zunehmender Dichte eine geringere Wärmeleitfähigkeit aufweisen, weil der Beitrag der Gasleitung aufgrund von kleineren Poren abnimmt. So kann die Wärmedämmung bis zu einer Dichte von vorzugsweise ca. 250 g/l verbessert werden. Oberhalb von vorzugsweise 250 g/l nimmt die Wärmeleitung aufgrund des steigenden Anteils an Festkörperleitung wieder leicht zu.

Im vorliegenden Fall der neuen Dämmschicht werden die niedrigsten Wärmeleitfähigkeitswerte sogar bei einer geringen Dichte von 60 bis 120 g/l erreicht. Die erreichbaren Werte liegen bei dieser Dichte zwischen 12 und 24 mW/mK.

Ein weiterer Gegenstand der Erfindung ist ein Verfahren zur Herstellung der Wärmedämm-Pulvermischung, dadurch gekennzeichnet, dass mindestens eine Kieselsäure mit einer BET-Oberfläche nach DIN ISO 9277 von 130 - 1200 m²/g, die intensiv vordispergiert wurde und einen D(50)-Wert unter 60 µm aufweist und mindestens ein Fasermaterial mit einem Faserdurchmesser von 1 - 50 µm unter hohen Scherkräften gemischt werden. Das erfindungsgemäße Verfahren dient zur Herstellung neuer Dämmschichten, die in Form von Wärmedämmstoffmischungen oder von durch einen Pressvorgang verdichteten Wärmedämmstoffmischungen als Wärmedämm-Formkörper vorliegen können.

Die neuen Dämmschichten werden durch intensives Vermischen der Pulver hergestellt. Hierbei entstehen neue Dämmstoffmischungen. Sie können danach vorzugsweise durch einen Pressvorgang zu einem Formkörper verdichtet werden. Nach dem Pressen kann eine Temperaturerhöhung folgen. Diese führt nach dem Erkalten zu einer Verfestigung der Dämmstoffmischungen und Formkörper. Der Zusammenhalt von mehreren Dämmschichten wird erreicht durch mechanisches Verhaken der Fasern untereinander und mit den anderen Dämmschichten beim Verpressen sowie durch Erweichen bzw. Verflüssigen des Hydrophobierungsmittels mittels Temperaturerhöhung, was eine Benetzung der Grenzflächen der Schichten und der Oberflächen der Pulver und Formkörper zur Folge hat, und Verfestigung des Hydrophobierungsmittels nach Temperaturerniedrigung.

Die Herstellung der neuen Wärmedämmstoffmischungen kann generell in diversen Misch- und Dispergieraggregaten stattfinden. Bevorzugt kommen jedoch hochscherende Geräte zur Anwendung.

Hierbei ist nicht zwingend notwendig, aber vorteilhaft, erst die Kieselsäure vorzudispergieren / zu desagglomerieren und dann mit den restlichen Komponenten hochscherend zu dispergieren.

Eine bevorzugte Prozedur sieht vor, erst die Kieselsäure vorzudispergieren / zu desagglomerieren, dann die Gesamtmenge an Fasern zuerst mit einem Teil der Kieselsäure als eine Art Masterbatch vorzumischen, um damit ein vollständiges Aufschließen der Fasern zu gewährleisten. Bevorzugt enthält der Masterbatch Faser und Kieselsäure maximal im Verhältnis 1 : 10, besonders bevorzugt maximal 1 : 5. Nach dem Faseraufschluss erfolgt die Zugabe der restlichen Kieselsäure und der restlichen Komponenten, bis auf das hydrophobierende Pulver.

Alternativ kann der Masterbatch auch die Gesamtmenge IR-Trübungsmittel und Faser enthalten. Nach intensiver Dispergierung wird die vordispergierte Kieselsäure hinzugegeben und intensiv eingemischt. Zum Schluß erfolgt die Einmischung der restlichen Komponenten, bis auf das Hydrophobiermittel.

Als letztes in der Mischabfolge geschieht die Zugabe der hydrophoben Pulver. Hierbei kann es notwendig sein, die Mischung und das Hydrophobierungsmittel zu kühlen, damit das Hydrophobierungsmittel als Feststoff untergemischt werden kann. Da beim Mischen Energie frei wird, muss die Kühltemperatur gegebenenfalls sehr niedrig sein, damit das Hydrophobierungsmittel fest bleibt und unter hoher Scherung intensiv untergemischt werden kann.

Nach Beendigung des Mischprozesses kann die Schüttdichte der Mischung je nach Art und Menge der Komponenten vorzugsweise zwischen 20 - 150 g/l, bevorzugt 20 - 90 g/l, besonders bevorzugt 20 - 60 g/l und ganz besonders bevorzugt 20 - 40 g/l betragen.

Um eine hohe Homogenität und eine so niedrige Schüttdichte der Mischung, wie vorzugsweise 20 - 40 g/l, zu erreichen, sind besonders hohe Scherkräfte nötig. Die Scherrate beim Mischen liegt dabei vorzugsweise über 10 m/s, bevorzugt über 20 m/s, besonders bevorzugt über 28 m/s, ganz besonders bevorzugt über 50 m/s. Geeignet sind Geräte, wie Dissolver, Planetendissolver, Zyklonmischer, Fluidmischer, Mahlsichter und andere Rotor-Stator-Systeme.

Ziel der hohen Scherung ist eine hohe Desagglomeration der Kieselsäure bei der Vordispergierung und ein optimaler Aufschluss der Fasern sowie eine äußerst homogene Vermischung aller Pulver im weiteren Dispergierverlauf.

Nach Desagglomeration liegt der D(50)-Wert der Kieselsäure vorzugsweise unter 60 µm, bevorzugt unter 30 µm und besonders bevorzugt unter 15 µm. Der D(95)-Wert der Kieselsäure liegt vorzugsweise unter 150 µm, bevorzugt unter 90 µm und besonders bevorzugt unter 25 µm. Die niedrigsten Werte werden mittels Mahlsichter unter Verwendung eines Rotors erreicht.

Für die hochscherende Dispergierung der Mischung werden Dissolver, Planetendissolver, Zyklonmischer und Rotor-Stator-Systeme eingesetzt. Die sehr homogene Vermischung der Pulver führt zu einer optimalen Festigkeit der resultierenden Dämmplatte und zu einer besonders niedrigen Wärmeleitfähigkeit.

Das Hydrophobierungsmittel kann bei Bedarf vor Einsatz für die Herstellung der Dämmmischung mittels Mahlung oder Cryo-Mahlung auf eine möglichst geringe Korngröße gemahlen werden.

In einer besonderen Ausführung wird die beschriebene Mischung noch mit ein oder mehreren geschäumten oder geblähten Pulvern, wie Perlite, Vermiculit, Blähton, Blähglimmer, Polystyrol, Neopor oder Polyurethan, vermischt. Vorzugsweise werden die geschäumten oder geblähten Pulver zur beschriebenen Mischung hinzugegeben. Da die geblähten oder geschäumten Pulver bei Scherung fragil sind, muss das Pulver schonend zugemischt werden. Hierfür kommen verschiedenste Geräte in Frage, wie Paddelmischer, Vrieco-Nauta-Mischer, Beba-Mischer, Ekato-Mischer. Entscheidend für die Qualität sind die Vermeidung des Korn-Einklemmens (z.B. zwischen den Werkzeugen oder zwischen Behälter und Werkzeug) und die geringe Scherrate. Die Scherrate liegt unter 5 m/s, bevorzugt unter 2 m/s, besonders bevorzugt unter 1 m/s.

Die Rieselfähigkeit der resultierenden porösen Mischung ist sehr gut, so dass sie auch problemlos und homogen zu Platten verpresst und auch z.B. in die Hohlräume von Hohlbausteinen eingefüllt und verpresst werden kann.

Das hydrophobierende Pulver kann thermisch nachbehandelt werden. Durch die thermische Behandlung oberhalb des Schmelzpunktes wird die Fließgrenze des Pulvers überschritten und eine Filmbildung und eine noch feinere Verteilung innerhalb des Dämmstoffes erreicht. Nach dem Erstarren beobachtet man eine signifikante zusätzliche Verfestigung des Dämmstoffes. Die Kombination aus Faser und hydrophobierendem Pulver verleiht der finalen Dämmstoffschicht eine sehr hohe Festigkeit. Die thermische Nachbehandlung kann vor oder nach dem Pressen erfolgen.

Aus der Dämmmischung kann zur weiteren Verfestigung durch einen Pressvorgang ein Wärmedämm-Formkörper erzeugt werden. Hierfür wird die Dämmmischung in einem oder mehreren Schritten in die Kavität eines Presswerkzeugs gefüllt und mittels Pressstempel verdichtet. Die resultierende Dichte kann vorzugsweise zwischen 30 und 500 g/l, bevorzugt zwischen 70 und 350 g/l, besonders bevorzugt zwischen 80 und 250 g/l betragen. In einer speziellen Ausführung liegt die Dichte zwischen 180 und 250 g/l.

Der Formkörper kann zusätzlich durch Tauchen oder Sprühen behandelt werden. Hierbei kommt vorzugsweise ein bei Raumtemperatur flüssiges, hydrophob wirkendes Reagenz zum Einsatz, wie vorzugsweise Silikonöl, Alkylsilan oder Hexamethyldisilazan. Besonders bevorzugt ist Silikonöl.

Die neue Dämmschicht als Formkörper oder als Pulvermischung hat eine hohe thermische Isolierwirkung. Die erreichte Wärmeleitfähigkeit liegt vorzugsweise zwischen 12 - 35 mW/mK, bevorzugt 12 - 24 mW/mK, besonders bevorzugt zwischen 12 - 20 mW/mK.

Die Stärke der neuen Dämmschicht liegt zwischen 0,5 mm und 15 cm.

Die neue Dämmschicht kann mit konventionellen Dämmschichten zu einer Wärmedämmung kombiniert werden. Die Zahl der Schichtlagen kann dabei vorzugsweise zwischen 2-30, bevorzugt zwischen 2-15 und ganz besonders bevorzugt zwischen 3-10 betragen. Vorzugsweise sind die neuen und konventionellen Dämmschichten alternierend angeordnet. Die Schichtanordnung kann durch Kombination von fertigen Dämmschichten entstehen. In diesem Fall sorgt das zu tempernde Hydrophobierpulver für den Zusammenhalt in und zwischen den Schichten. Die Schichtanordnung kann aber auch durch Schüttung von verschiedenen Mischungen (auch hier sind alternierende Anordnungen von neuen und konventionellen Mischungen bevorzugt) und nachträgliches Pressen und Tempern entstehen. Der Zusammenhalt dieser Schichten ist durch mechanisches Verhaken über die Glasfaser und durch das an der Grenzfläche der Schichten wirkende Hydrophobierpulver gewährleistet. In einer speziellen Ausführung können die Dämmschichten oder die Schüttungen durch PU-Schaum, Haftschäume, Haftvermittler oder Klebstoffe miteinander verbunden werden. In einer weiteren speziellen Ausführung wird der Zusammenhalt durch eine Hülle realisiert. Hierbei kann es sich um eine Folie oder eine Vlies halten. Vorzugsweise ist die Folie bzw. das Vlies niedrig wärmeleitend.

In einer besonderen Ausführung wird nur die neue Wärmedämmung ohne Kombination mit konventionellen Dämmschichten eingesetzt.

In einer weiteren besonderen Ausführung kann das hydrophobierende Pulver der neuen Dämmschicht auch weggelassen werden, wenn mindestens eine Kieselsäure des gewählten Kieselsäuregemisches oder / und das IR-Trübungsmittel bereits hydrophob ist.

Aus den Dämmschichten können Formkörper unterschiedlicher Geometrie und Größe gemacht werden, z.B. Ringe, Scheiben und Platten. Bevorzugt sind Platten, die erfindungsgemäß in folgenden Dämmsystemen zum Einsatz kommen als:
Dämmung in Bauhohlsteinen
Kerndämmung bei mehrschaligen Bausteinen
Kerndämmung für Vakuumisolationsplatten (VIP)
Kerndämmung für Wärmedämmstoffverbundsysteme (WDVS)
Dämmung bei zweischaligen Mauerwerken

Im Fall der Vakuumisolationspaneele (VIP) wird durch Evakuierung der noch in den nanoskaligen Hohlräumen vorhandenen Restgase auf moderate Unterdrücke unter 100 mbar (vorzugsweise 0.01 - 10 mbar), die Wärmeleitfähigkeit durch Unterdrückung der Konvektion / Gasleitung noch einmal auf Werte von 1 - 10 mW/mK reduziert.

Die vorher eingevliesten mikroporösen Dämmplatten werden in eine vakuumdichte Umhüllung gebracht. Diese vakuumdichten Umhüllungen können sogenannte Aluminiumverbundfolien, metallisierte Folien sein oder vorzugsweise eine metallische Umhüllung auf Basis von vorzugsweise Edelstahl oder Weßblech bzw. Kunststoffen, vorzugsweise Polypropylen. Die metallischen Umhüllungen weisen vorzugsweise eine koextrudierte Beschichtung auf Basis eines Polyolefinterpolymers mit einer hervorragenden Haftung zum Metall und guten Barriereeigenschaften gegenüber Luft und Wasserdampf auf.

Nach Einbringung des mikroporösen Wärmedämmkerns in die Folienbeutel werden die Dämmplatten in eine Vakuumkammer eingebracht und auf den vorgesehenen Enddruck evakuiert. Die in Folienbeutel eingebrachten mikroporösen Wärmedämmstoffplatten werden in der Vakuumkammer verschweißt.

Bei der metallischen Umhüllung wird nach Einbringung des mikroporösen Dämmkerns in die untere Metallschale und Evakuierung in der Vakuumkammer ein Deckel passgenau auf die untere Schale aufgepresst. Beide Metallteile (untere Schale und Deckel) sind vorzugsweise mit einer koextrudierten Polyolefinschicht beschichtet (Dicke vorzugsweise zwischen 0,05 - 0,5 mm), bevorzugt 0,2-0,4 mm, um Wärmebrücken durch direkten Metalkontakt zu vermeiden.

Als Thermoplast wird vorzugsweise ein Polypropylen/Polyethylen-Acrylat Terpolymer eingesetzt, welcher hervorragende Adhäsion zum Metall und gute Barriereeigenschaften aufweist.
Die so hergestellten VIP's haben somit eine diffusionsdichte Umhüllung, sind gegen Verletzung unempfindlich und sind somit prädestiniert für den Einsatz im Baubereich.

Zur Vermeidung von Wärmebrücken durch die metallische Umhüllung, speziell bei kleinen Dimensionen, werden vorzugsweise mechanisch stabile Umhüllungen auf Basis PP bzw. PP/PVDC Verbundsystemen verwendet, in welche auf die gesamte Ober-/Unterfläche eine gasundurchlässige Aluminiumverbundfolie einlaminiert wird, wobei nur die äußere Umrandung aus reinem PP/PVDC besteht.

Die neuen Wärmedämmschichtsysteme können im evakuierten und nicht evakuierten Zustand (VIP) vorzugsweise in verschiedenen Wärmeisolationsanwendungen eingesetzt werden. Eine bevorzugte Anwendung liegt im Baubereich. Die erfindungsgemäße Dämmung ist zur Altbausanierung sowie für den Neubau geeignet, z.B. vorzugsweise für Fußboden- und Dachisolierung sowie für die Fassadeninnen- wie -außendämmung. Dabei kann das neue Dämmsystem vorzugsweise direkt, als Kernmaterial eines Mauerwerks, als Teil eines Wärmedämmverbundsystems (WDVS) oder mit einer Metall- oder Kunststoffumhüllung eingesetzt werden.

Geht es um Wärmedämmverbundsysteme, werden zur Stabilisierung der Paneele dieselben vorzugsweise mit Umhüllungen versehen, die aus einem Press-, Walz-, Extrusions- Schaum- oder Faserwerkstoff bestehen, wobei der Kern sowohl unter Normaldruck als auch unter Unterdruck gehalten werden kann. Die Umhüllung kann für Normalbedingungen ein- oder zweiflächig sein oder alle Flächen des Paneels umhüllen, kann aber auch mehrschichtig gestaltet werden und kann an den verschiedenen Paneelseiten aus gleichem oder aus unterschiedlichem Umhüllungsmaterial bestehen. Bei Unterdruckbedingungen umfasst naturgemäß die Umhüllung alle Flächen des Paneels.

Die verstärkende Umhüllung kann vorzugsweise bestehen aus:
Karton, Holz, Gipskarton, Schrumpffolien, die nach dem Schrumpfprozess perforiert werden, diversen Kunststoffen, Vliesgeweben, Glasfaser verstärkten Kunststoffen (GFK) vorzugsweise auf Basis von Polyesterharz, Epoxidharz oder Polyamid.

Zur kraftschlüssigen Verbindung der Umhüllungen, vornehmlich bei Verbünden von mehreren Schichten, werden vorzugsweise Kleber eingesetzt. Diese sind verzugsweise ausgewählt aus anorganischen Komponenten, wie Wassergläsern, Kieselsolen und Phosphaten, sowie aus organischen Verbindungen wie Reaktionsharzen, Kunststoffdispersionen oder Thermoplasten.

Im Fall der Wärmedämmstoffverbundsysteme (WDVS) können die erfindungsgemäßen neuen Dämmstoffe aufgrund ihrer hohen Hydrophobie auch direkt, also ohne Vakuum und Umhüllung eingesetzt werden. Typischerweise werden sie dann noch vorzugsweise mit einer Armierungs- und einer Putzschicht versehen.

Ein weiterer Gegenstand der Erfindung sind Formkörper, Bausteine, Bausysteme und Bauverbundsysteme, die die erfindungsgemäßen Wärmedämmstoffe aufweisen, wobei diese Formkörper, Bausteine, Bausysteme und Bauverbundsysteme aus den Wärmedämmstoffen teilweise oder vollständig bestehen.

Ein Einsatz der in der Erfindung oben beschriebenen hydrophoben porösen Wärmedämmstoffe findet erfindungsgemäß vorzugsweise in Bauhohlsteinen statt.

Hohlbausteine sind Bauelemente, die einen oder mehrere Hohlräume aufweisen. Sie können vorzugsweise aus anorganischen, keramischen Materialien, wie gebranntem Tongut (Ziegel), Beton, Glas, Gips sowie Naturprodukten wie Naturstein, z.B. Kalksandstein bestehen. Vorzugsweise kommen Hohlbausteine aus Ziegel, Beton und Leichtbeton zur Anwendung.

Ausführungsformen sind Wandbausteine, Bodenplatten, Deckenelemente und Vorbauelemente.

Es ist bekannt, dass die Hohlräume dieser Bauelemente mit porösem hohlraumstrukturierten Dämmmaterialien wie Styroporschaum oder Perlite-Schaum gefüllt sein können (DE3037409A1 und DE-OS2825508). Diese Bauelemente werden als Hohlbausteine mit integrierter Wärmedämmung bezeichnet.

Hohlbausteine mit integrierter Wärmedämmung haben den Vorteil, dass der Ziegelhauscharakter bei der Bauausführung erhalten bleibt.

Die Verwendung dieser Hohlbausteine mit integrierter Wärmdämmung soll im Mauerwerk eine besonders hohe Wärmedämmung und eine günstige Wasserdampfdurchlässigkeit sowie kaum Wasseraufnahme gewährleisten, zudem soll die Wärmespeicherung begünstigt werden.

Die Dämmmaterialien in diesen Hohlblocksteinen mit integrierter Wärmedämmung können sowohl organischen wie anorganischen Ursprungs sein.

An organischen Materialien werden als Isoliermaterial geschäumte Polystyrolteilchen bevorzugt eingesetzt. Dabei sind die aufgeschäumten Kunststoffpartikel oberflächlich unter Freilassung von gasdurchlässigen Zwischenräumen miteinander verbunden und verankert.

Die Herstellung erfolgt durch Füllung der Hohlräume mit einer Schüttung von Styrolgranulat und anschließender Aufschäumung mit heißen Gasen, vornehmlich Wasserdampf. Derartige Isolierbausteine zeichnen sich durch eine verbesserte Wärmedämmfähigkeit aus. Von Nachteil ist die Brennbarkeit der organischen Bestandteile dieser Bauelemente. Ebenso läßt die Wärmedämmfähigkeit durch die Aufnahme von Wasser/Feuchtigkeit mit der Zeit stark nach.

Als anorganische Materialien für Hohlbausteine mit integrierter Wärmedämmung kommen vorzugsweise geschäumte Perlite und Vermiculite zum Einsatz. Bevorzugt werden geschäumte Perlite eingesetzt, die mit Bindemitteln wie wässrigen Dispersionen auf Basis Vinylacetat- und Acrylvinylacetat-Copolymeren abgebunden und verfestigt werden. Diese Füllungen weisen mit den notwendigen Bindungsmitteln einen hohen Anteil an brennbaren Komponenten auf, auch ist die resultierende Wärmedämmung nicht optimal.

Ein Abbindung und Verfestigung der Perlite kann vorzugsweise ebenfalls mit Alkaliwassergläsern als Bindemittel erfolgen. Dieses Verfahren führt zu Kernmaterialien, die stark alkalisch,

Wasser anziehend sind und zu Ausblühungen führen. Hinzu kommt, dass die schon von vornherein ungenügenden
Wärmedämmeigenschaften noch weiter herabgesetzt werden. Die Verwendung von Kieselsol als Bindemittel führt zu einem schlecht verfestigten Dämmmaterial mit hoher Wasseraufnahme und schlechten Wärmeisolationseigenschaften.

Durch den erfindungsgemäßen Einsatz der beschriebenen hydrophoben porösen Wärmedämmstoffe in Hohlbausteinen werden die Wärmedämmeigenschaften dieser Steine wesentlich verbessert und nachhaltig auf hohem Niveau gehalten.

Erfindungsgemäß können die entsprechenden Wärmedämmstoffe zu maßgenauen Platten verpresst und in die Kammern der Bauhohlsteine integriert werden, es kann aber auch die neue Mischung in die Kammern der Bausteine eingefüllt und mittels Presshilfen direkt in den Kammern verpresst werden. Alternativ können maßgenaue Platten aus zuvor hergestellten Großplatten herausgeschnitten und in die Bausteine integriert werden.

Ebenfalls möglich ist eine Fixierung der Platten in den Hohlräumen mittels vorzugsweise Polyurethanschaum oder anderer Haftschäume bzw. Kleber.

Desgleichen kann eine Umhüllung mit vorzugsweise Vliesmaterialien, um z.B. eine mechanische Beeinflussung und somit auch ein Ausstauben der Wärmedämmung zu verhindern, vorgenommen werden.

Um hierbei die Wirksamkeit der erreichbaren Wärmedämmungen im Verhältnis zur Wirtschaftlichkeit optimal zu nutzen, sind erfindungsgemäß effektive Kombinationen zwischen hocheffizienter hydrophober poröser Wärmedämmung mit herkömmlichen Wärmedämmsystemen mit geringeren Wärmedämmwirkungen möglich. Desgleichen können, je nach Einsatz und Dämmvermögen einzelne oder mehrere Hohlkammern auch ohne Wärmedämmmaterzalien versehen sein.

Die Erfindung wird in den folgenden Ausführungen beispielhaft beschrieben:
Im Rahmen der vorliegenden Erfindung sind, falls jeweils nicht anders angegeben, alle Mengen- und Prozentangaben auf das Gewicht und alle Prozentangaben sind auf das Gesamtgewicht bezogen, alle Temperaturen 20°C und alle Drücke bei der umgebenden Atmosphäre, also 900 bis 1100 omi+"1" hPa. Alle Viskositäten werden bei 25°C bestimmt.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und sofern nicht anders angegeben bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1:

Komponenten:
Hydrophile pyrogene Kieselsäure mit BET-Oberfläche 300 m²/g: 88 Gew.%
Glasfaser (Länge 6 mm, Stärke 7 µm): 2 Gew.%
SiC (D(50) = 5 µm) : 4 Gew.%
Silikonharz Polymethylsiloxan, mit der Kryomühle auf D(50) = 10 µm gemahlen: 6 Gew.%

6.5 g Fasern, 15,2 g SiC und 50 g Kieselsäure wurden zum Aufschluss der Fasern zunächst 3 min lang im Zyklonmischer bei 15000 UpM vorgemischt. Anschließend wurde der Rest der Feststoffkomponenten (285,5 g Kieselsäure) zugegeben und weitere 2 min unter den gleichen Mischbedingungen gemischt. In diese Mischung wurden dann 22,8 g Silikonharz gegeben und eine weitere Minute gerührt.

238 g der fertigen Mischung wurde entnommen und zu einem Festkörper der Außenmasse 200*200*38 mm verpresst, so dass eine Dichte von 120 g/l resultiert. Dieser Formkörper wurde anschließend 120 min bei 70°C erhitzt.

### Beispiel 2:

Komponenten:
Hydrophile pyrogene Kieselsäure mit BET-Oberfläche 300 m2/g: 80 Gew.%
Glasfaser (Länge 6 mm, Stärke 7 µm) : 4 Gew.%
SiC (D(50) = 5 µm) : 4 Gew.%
Fluorcarbonverbindung PVDF (mit Kryomühle auf D(50) = 20 µm gemahlen): 12 Gew.%

14 g Fasern, 15 g SiC und 50 g Kieselsäure wurden zum Aufschluss der Fasern zunächst 3 min lang im Zyklonmischer bei 15000 UpM vorgemischt. Anschließend wurde der Rest der Feststoffkomponenten (255 g Kieselsäure) zugegeben und weitere 2 min unter den gleichen Mischbedingungen gemischt. In diese Mischung wurden dann 46 g PVDF-Pulver gegeben und eine weitere Minute gerührt.

238 g der fertigen Mischung wurde entnommen und zu einem Festkörper der Außenmasse 200*200*38 mm verpresst, so dass eine Dichte von 120 g/l resultiert. Dieser Formkörper wurde anschließend 120 min bei 190°C erhitzt.

### Beispiel 3:

Komponenten:
Hydrophile pyrogene Kieselsäure mit BET = 300 m2/g und hydrophobe pyrogene Kieselsäure mit BET-Oberfläche 200 m2/g und 5% C-Anteil resultierend aus einer PDMS-Beschichtung: 63 + 27 Gew.%, respektive
Cellulosefaser (Länge 6 mm, Stärke 7 µm): 6 Gew.%
Graphit-Pulver (D(50) = 4 µm): 4 Gew.%

Die hydrophile und hydrophobe Kieselsäure wurden zunächst im Mahlsichter (Rotor 7000 U/min, Sichter 6500 U/min) aufgeschlossen, bis der D(50)-Wert bei 10 µm lag. Dann wurden die beiden Kieselsäuren, die Faser und das Graphitpulver 10 min lang im Zyklonmischer bei 15000 UpM gemischt.

200 g der fertigen Mischung wurde entnommen und zu einem Festkörper der Außenmasse 200*200*38 mm verpresst, so dass eine Dichte von 100 g/l resultiert.

### Beispiel 4:

Komponenten:
Hydrophile pyrogene Kieselsäure mit BET = 300 m2/g und hydrophobe pyrogene Kieselsäure mit BET-Oberfläche 200 m2/g und 5% C-Anteil resultierend aus einer PDMS-Beschichtung: 63 + 27 Gew.%, respektive
Cellulosefaser (Länge 6 mm, Stärke 7 µm) : 6 Gew.%
Graphit-Pulver (D(50) = 4 µm) : 4 Gew.%

Die hydrophile und hydrophobe Kieselsäure wurden zunächst im Mahlsichter (Rotor 7000 U/min, Sichter 6500 U/min) aufgeschlossen, bis der D(50)-Wert bei 10 µm lag. Dann wurden die beiden Kieselsäuren, die Faser und das Graphitpulver 10 min lang im Zyklonmischer bei 15000 UpM gemischt.

400 g der fertigen Mischung wurde entnommen und zu einem Festkörper der Außenmasse 200*200*38 mm verpresst, so dass eine Dichte von 190 g/l resultiert.

### Beispiel 5:

Die Mischung aus Beispiel 1 wurde auf eine Dichte von 250 g/l gebracht und für 20 s in ein Bad aus Silikonöl getaucht. Die getränkte Platte wurde danach 30 min bei 210°C im Trockenschrank getempert.

### Beispiel 6:

Für einen Mehrschichtaufbau wurden die Pulvermischung aus Beispiel 3 (Mischung A) und hydrophober Perlit (0-1 Perlit der Fa. Knauf) (Mischung B) herangezogen. Abwechselnd wurden 3 cm Schüttungen der Mischung A und der Mischung B in die Kavität eines Presswerkzeuges eingebracht, bis insgesamt 16 Pulverschichten vorlagen. Die Gesamtschüttung wurde auf eine Dichte von 120 g/l gepresst.

### Beispiel 7:

Für einen Dreischichtaufbau wurde die Dämmplatte aus Beispiel 3 (allerdings mit den Abmessungen 245*245*50) mittig in einem Dämmziegel platziert. Die beiden ungefüllten Seiten wurden mit hydrophobem Perlit (0-1 Perlit der Fa. Knauf) aufgefüllt. Es wurde ein geschäumter 0-1 Perlit der Fa. Knauf eingesetzt, der mit einer wässrigen Dispersionen auf Basis von Vinylacetat- und Acrylvinylacetat-Copolymeren vermischt war. Ein Pressstempel verdichtete die Perlitschüttung auf 70 g/l. Zur Abbindung wurde der gefüllte Ziegel bei 140°C für 60 min temperiert.

### Beispiel 8:

Für einen Dreischichtaufbau wurde die Dämmplatte aus Beispiel 4 für 20 s in ein Bad aus Hexamethyldisilazan getaucht. Diese Platte wurde dann mittig zwischen 2 Platten aus expandiertem Polystyrol der Stärke 10 cm platziert. Das System wurde bei 60°C für 60 min temperiert und nach Abkühlen auf Raumtemperatur mit einem Glasfaservlies eingevliest. Die neue Dämmung eignete sich zum Einsatz in Wärmedämmverbundsystemen.

### Beispiel 9:

Die Dämmplatte aus Beispiel 4 wurde mittels Glasfaservlies eingefliest und in eine vakuumdichte Umhüllung aus Aluminiumverbundfolien gebracht. Dann wurde auf einen Druck von 0.1 mbar evakuiert und verschweißt. Die Wärmeleitfähigkeit des resultierenden Vakuumisolationspanels beträgt 4 mW/mK.

### Beispiel 10:

Komponenten:
Hydrophile pyrogene Kieselsäure mit BET = 300 m2/g: 24 Gew.-%
Hydrophobe pyrogene Kieselsäure mit BET-Oberfläche 200 m2/g und 5% C-Anteil resultierend aus einer PDMS-Beschichtung: 27 Gew.%
Kieselsäure mit Aerogel-Struktur mit BET-Oberfläche 500 m2/g: 39 Gew.-%
Cellulosefaser (Länge 6 mm, Stärke 7 µm): 6 Gew.%
Graphit-Pulver (D(50) = 4 µm) : 4 Gew.%

Die Kieselsäuren wurden zunächst im Mahlsichter (Rotor 7000 U/min, Sichter 6500 U/min) aufgeschlossen, bis der D(50)-Wert bei 10 µm lag. Dann wurden sie und die Faser zum Aufschluss der Fasern zunächst 6 min lang im Zyklonmischer bei 15000 UpM vorgemischt. Anschließend wurde das Graphit-Pulver zugegeben und weitere 2 min unter den gleichen Mischbedingungen gemischt.

400 g der fertigen Mischung wurde entnommen und zu einem Festkörper der Außenmasse 200*200*38 mm verpresst, so dass eine Dichte von 200 g/l resultiert.

### Beispiel 11:

Komponenten:
Hydrophile pyrogene Kieselsäure mit BET = 300 m2/g und hydrophobe pyrogene Kieselsäure mit BET-Oberfläche 200 m2/g und 5% C-Anteil resultierend aus einer PDMS-Beschichtung: 39 + 27 Gew.%, respektive
Cellulosefaser (Länge 6 mm, Stärke 7 µm) : 6 Gew.%
Graphit-Pulver (D(50) = 4 µm) : 4 Gew.%
Silica Fume (Schüttdichte 190 g/l, BET 30 m2/g): 24 Gew.%

Die hydrophile und hydrophobe Kieselsäure wurden zunächst im Mahlsichter (Rotor 7000 U/min, Sichter 6500 U/min) aufgeschlossen, bis der D(50)-Wert bei 10 µm lag. Dann wurden sie und die Faser zum Aufschluss der Fasern zunächst 3 min lang im Zyklonmischer bei 15000 UpM vorgemischt. Anschließend wurden das Graphit-Pulver und Silica Fume zugegeben und weitere 2 min unter den gleichen Mischbedingungen gemischt.

200 g der fertigen Mischung wurde entnommen und zu einem Festkörper der Außenmasse 200*200*38 mm verpresst, so dass eine Dichte von 100 g/l resultiert.

### Beispiel 12:

Ein Glasfaservlies von 0,5 cm Stärke wurde am Boden eines Presswerkzeuges platziert. 400 g der Mischung aus Beispiel 4 wurden auf dieses Vlies gefüllt. Oberhlab der Mischung wurde ein weiteres Glasfaservlies von 0,5 cm Stärke platziert. Dieser Aufbau wurde zu einem Festkörper der Außenmasse 200*200*38 mm verpresst, so dass eine Dichte von 200 g/l resultiert. Die neue Dämmung eignete sich zum Einsatz in Wärmedämmverbundsystemen.

### Beispiel 13:

Komponenten:
Hydrophile pyrogene Kieselsäure mit BET = 300 m2/g und hydrophobe pyrogene Kieselsäure mit BET-Oberfläche 200 m2/g und 5% C-Anteil resultierend aus einer PDMS-Beschichtung: 63 + 27 Gew.%, respektive
Cellulosefaser (Länge 6 mm, Stärke 7 µm) : 6 Gew.%
Graphit-Pulver (D(50) = 4 µm) : 4 Gew.%

Sämtliche Komponenten wurden 15 min lang im Dissolver bei 4000 UpM (entspricht einer Werkzeugumfangsgeschwindigkeit von 55 m/s) gemischt.

400 g der fertigen Mischung wurde entnommen und zu einem Festkörper der Außenmasse 200*200*38 mm verpresst, so dass eine Dichte von 190 g/l resultiert.

### Beispiel 14:

500 g der Mischung aus Beispiel 13 wurden mit 500 g hydrophobem Perlit (0-1 Perlit der Fa. Knauf) 10 min bei einer Scherrate von 2 m/s im Vrieco-Nauta-Mischer vermischt. 200 g der fertigen Mischung wurde entnommen und zu einem Festkörper der Außenmasse 200*200*38 mm verpresst, so dass eine Dichte von 95 g/l resultiert.

**Tabelle Leitfähigkeiten**

| Mischung | Dichte (g/l) | λ-Wert (mW/mK) | Hydrophobie |
|---|---|---|---|
| Beispiel 1 | 120 | 20,9 | Wassertropfeneindringzeit 20 s |
| Beispiel 2 | 120 | 19,8 | ja |
| Beispiel 3 | 100 | 18,1 | ja |
| Beispiel 4 | 190 | 17,3 | ja |
| Beispiel 5 | 250 | 21,5 | ja |
| Beispiel 6 | 120 | 30,2 | ja |
| Beispiel 10 | 200 | 12,5 | ja |
| Beispiel 11 | 100 | 22,2 | ja |
| Beispiel 13 | 190 | 18,3 | ja |
| Beispiel 14 | 95 | 29,5 | ja |

Bestimmung der Hydrophobie: Auftragen eines Wassertropfens auf eine Platte. Sinkt der Tropfen im Zeitraum von 1 h ein: Hydrophobie nein; sinkt der Tropfen im Zeitraum von 1 h nicht ein: Hydrophobie ja.

Die Bestimmung der Wärmeleitfähigkeit erfolgte nach EN 12667, EN 1946-3 und ISO 8301 mittels eines Messgerätes vom Typ Hesto Lambda Control HLC A60.

Die Bestimmung der Schüttdichte wurde nach DIN ISO 697 und EN ISO 60 durchgeführt.

Die Bestimmung der BET-Oberfläche richtete sich nach DIN ISO 9277.

Für die Bestimmung der Korngrößen der Pulver nach ISO 13320-1 wurde ein Laserbeugungsgerät vom Typ Malvern Mastersizer verwendet. Der D(50)-Wert beschreibt die mittlere Partikelgröße. D(95) bedeutet, dass 95% der Partikel kleiner sind als der angegebene Wert. D(50) bedeutet, dass 50% der Partikel kleiner sind als der angegebene Wert.

Die Umdrehungszahl von 15000 UpM im Zyklonmischer entspricht einer Werkzeugumfangsgeschwindigkeit von 70 m/s.

## Patentansprüche

1. Wärmedämm-Pulvermischung, die eine Schüttdichte nach DIN ISO 697 und EN ISO 60 von 20 - 60 g/l aufweist und die mindestens eine Kieselsäure mit einer BET-Oberfläche nach DIN ISO 9277 von 130 - 1200 m²/g und mit einem D(50)-Wert unter 60 µm und mindestens ein Fasermaterial mit einem Faserdurchmesser von 1 - 50 µm enthält.

2. Wärmedämm-Pulvermischung nach Anspruch 1, **dadurch gekennzeichnet, dass** die Kieselsäure eine pyrogene Kieselsäure ist.

3. Wärmedämm-Pulvermischung nach Anspruch 1 und 2, **dadurch gekennzeichnet, dass** sie mindestens 15 Gew.-% einer hydrophoben Kieselsäure mit einem Kohlenstoff-Anteil von mindestens 1 Gew.-% enthält.

4. Wärmedämm-Pulvermischung nach Anspruch 1 und 2, **dadurch gekennzeichnet, dass** sie mindestens ein Hydrophobierungsmittel aus der Reihe Silikonharz, Fluorcarbonverbindung und Kohlenstoff in einer Menge von 1 - 30 Gew.-% aufweist.

5. Wärmedämm-Pulvermischung nach Anspruch 1 bis 4, **dadurch gekennzeichnet, dass** sie einen IR-Trüber enthält.

6. Wärmedämm-Pulvermischung nach Anspruch 1 bis 5, **dadurch gekennzeichnet, dass** sie eine Schüttdichte nach DIN ISO 697 und EN ISO 60 von 20 - 90 g/l aufweist.

7. Wärmedämm-Pulvermischung nach Anspruch 1 bis 6, **dadurch gekennzeichnet, dass** sie geschäumte oder geblähte Pulver enthält.

8. Wärmedämm-Pulvermischung nach einem oder mehreren der vorhergehenden Ansprüche, **dadurch gekennzeichnet, dass** sie verschiedene Schüttschichten aufweist.

9. Wärmedämm-Formkörper aus einer Wärmedämm-Pulvermischung nach einem oder mehreren der vorhergehenden Ansprüche, **dadurch gekennzeichnet, dass** er eine Dichte nach DIN ISO 697 und EN ISO 60 von 70 - 350 g/l aufweist.

10. Wärmedämm-Formkörper nach Anspruch 9, **dadurch gekennzeichnet, dass** er eine Dichte von 70 - 120 g/l aufweist.

11. Wärmedämm-Formkörper nach Anspruch 9 und 10, **dadurch gekennzeichnet, dass** er eine Leitfähigkeit von 12 - 35 mW/mK gemessen nach EN 12667, EN 1946-3 und ISO 8301 aufweist.

12. Wärmedämm-Formkörper nach Anspruch 9 und 10, **dadurch gekennzeichnet, dass** er eine Leitfähigkeit von 12 - 24 mW/mK gemessen nach EN 12667, EN 1946-3 und ISO 8301 aufweist.

13. Wärmedämm-Formkörper nach einem oder mehreren der Ansprüche 9 bis 12, **dadurch gekennzeichnet, dass** er eine hohe Hydrophobie und eine geringe Wasseraufnahme nach DIN EN 12087 aufweist.

14. Wärmedämmung mit Schichtaufbau, **dadurch gekennzeichnet, dass** sie 2 bis 20 zusammenhängende Dämmschichtlagen aufweist, wobei davon mindestens eine konventionelle Dämmschichtlage aus der Gruppe
- Schüttung eines geschäumten oder geblähten anorganischen Materials, wie Perlite, Vermiculit, Blähton oder Blähglimmer, die durch einen Binder zusammengehalten wird
- Organische Dämmstoffplatte, wie geschäumtes Polystyrol, Neopor, Resol oder Polyurethan
- Dämmstoffplatte aus anorganischem, porösem Dämmmaterial, wie pyrogener Kieselsäure, versetzt mit IR-Trübungsmittel und Glasfaser
- Faservlies mit oder ohne Imprägnierung mit Kieselsäure, ausgewählt wird und die Wärmedämmung mit Schichtaufbau mindestens eine neue Dämmschichtlage gemäß einem Wärmedämm-Formkörper nach einem oder mehreren der Ansprüche 8 bis 12 aufweist.

15. Wärmedämmung mit Schichtaufbau nach Anspruch 14, wobei die Dicke der Schichten von 0,5 mm bis 15 cm reicht.

16. Verwendung der Wärmedämmung nach einem oder mehreren der vorhergehenden Ansprüche in einem Vakuumisolationspanel (VIP) oder aufgrund ihrer Hydrophobie in Bauhohlsteinen, mehrschaligen Bausteinen, zweischaligen Mauerwerken oder Wärmedämmstoffverbundsystem (WDVS) eingesetzt wird.

17. Verfahren zur Herstellung einer Wärmedämm-Pulvermischung, **dadurch gekennzeichnet, dass** mindestens eine Kieselsäure mit einer BET-Oberfläche nach DIN ISO 9277 von 130 - 1200 [m²/g] und mindestens ein Fasermaterial mit einem Faserdurchmesser von 1 - 50 µm unter hohen Scherkräften gemischt werden.

18. Verfahren nach Anspruch 17, **dadurch gekennzeichnet, dass** die Kieselsäure intensiv vordispergiert wird.

19. Verfahren nach Anspruch 17 und 18, **dadurch gekennzeichnet, dass** sich der Mischschritt in folgende Schritte unterteilt: Intensivmischen von Faser und einem Anteil Kieselsäure, Intensivhinzumischen der restlichen Kieselsäure und der restlichen Komponenten (ggf. unter Kühlung zur Vermeidung der Verflüssigung von Komponenten).

20. Verfahren nach Anspruch 17 und 18, **dadurch gekennzeichnet, dass** sich der Mischschritt in folgende Schritte unterteilt: Intensivmischen von Faser und IR-Trübungsmittel, Intensivhinzumischen der Kieselsäure und der restlichen Komponenten (ggf. unter Kühlung zur Vermeidung der Verflüssigung von Komponenten).

21. Verfahren nach Anspruch 17 bis 20, **dadurch gekennzeichnet, dass** in einem letzten Schritt geschäumte oder geblähte Pulver schonend hinzu gemischt werden.

22. Verfahren nach Anspruch 17 bis 21, **dadurch gekennzeichnet, dass** nach dem Mischen noch ein Verdichtungsschritt mittels Pressen erfolgt.

23. Verfahren nach Anspruch 22, **dadurch gekennzeichnet, dass** unmittelbar vor oder direkt nach dem Pressen eine Temperaturerhöhung erfolgt und der letzte Verfahrensschritt eine Abkühlung auf Raumtemperatur ist.

24. Verfahren nach Anspruch 22 oder 23, **dadurch gekennzeichnet, dass** der resultierende Formkörper mit einem hydrophob wirkenden Reagenz besprüht oder in ein solches getaucht wird.

## Claims

1. Thermally insulating powder mixture which has a bulk density in accordance with DIN ISO 697 and EN ISO 60 of 20-60 g/l and contains at least one silica having a BET surface area in accordance with DIN ISO 9277 of 130-1200 m²/g and a D(50) of less than 60 µm and at least one fiber material having a fiber diameter of 1-50 µm.

2. Thermally insulating powder mixture according to Claim 1, **characterized in that** the silica is a pyrogenic silica.

3. Thermally insulating powder mixture according to Claim 1 or 2, **characterized in that** it contains at least 15% by weight of a hydrophobic silica having a carbon content of at least 1% by weight.

4. Thermally insulating powder mixture according to Claim 1 or 2, **characterized in that** it comprises at least one hydrophobicizing agent from the group consisting of silicone resin, fluorocarbon compound and carbon in an amount of 1-30% by weight.

5. Thermally insulating powder mixture according to any of Claims 1 to 4, **characterized in that** it contains an IR opacifier.

6. Thermally insulating powder mixture according to any of Claims 1 to 5, **characterized in that** it has a bulk density in accordance with DIN ISO 697 and EN ISO 60 of 20-40 g/l.

7. Thermally insulating powder mixture according to any of Claims 1 to 6, **characterized in that** it contains foamed or expanded powders.

8. Thermally insulating powder mixture according to one or more of the preceding claims, **characterized in that** it has various layers of loose material.

9. Shaped thermal insulation body composed of a thermally insulating powder mixture according to one or more of the preceding claims, **characterized in that** it has a density according to DIN ISO 697 and EN ISO 60 of 70-350 g/l.

10. Shaped thermal insulation body according to Claim 9, **characterized in that** it has a density of 70-120 g/l.

11. Shaped thermal insulation body according to Claim 9 or 10, **characterized in that** it has a conductivity of 12-35 mW/mK measured in accordance with EN 12667, EN 1946-3 and ISO 8301.

12. Shaped thermal insulation body according to Claim 9 or 10, **characterized in that** it has a conductivity of 12-24 mW/mK measured in accordance with EN 12667, EN 1946-3 and ISO 8301.

13. Shaped thermal insulation body according to one or more of Claims 9 to 12, **characterized in that** it has a high hydrophobicity and a low water absorption in accordance with DIN EN 12087.

14. Thermal insulation having a layer structure, **characterized in that** it has from 2 to 20 adhering insulation layers of which at least one is a conventional insulation layer selected from the group consisting of
- a bed of a foamed or expanded inorganic material such as pearlite, vermiculite, expanded clay or expanded mica which is held together by means of a binder,
- an organic thermal insulation board such as foamed polystyrene, Neopor, resol or polyurethane,
- a thermal insulation board composed of inorganic, porous insulation material such as pyrogenic silica admixed with an IR opacifier and glass fibers,
- a fiber nonwoven with or without impregnation with silica,
and the thermal insulation having a layer structure has at least one novel insulation layer corresponding to a shaped thermal insulation body according to one or more of claims 8 to 12.

15. Thermal insulation having a layer structure according to Claim 14, wherein the thickness of the layers is from 0.5 mm to 15 cm.

16. Use of the thermal insulation according to one or more of the preceding claims in a vacuum insulation panel (VIP) or owing to its hydrophobicity in hollow building blocks, multishell building blocks, double masonry walls or composite thermal insulation systems (CTIS).

17. Process for producing a thermally insulating powder mixture, **characterized in that** at least one silica having a BET surface area in accordance with DIN ISO 9277 of 130-1200 M²/g and at least one fiber material having a fiber diameter of 1-50 µm are mixed in the presence of high shear forces.

18. Process according to Claim 17, **characterized in that** the silica is intensively predispersed.

19. Process according to Claim 17 or 18, **characterized in that** the mixing step is divided into the following steps:
intensive mixing of fibers and a proportion of silica,
intensive mixing-in of the remaining silica and the remaining components (optionally with cooling so as to avoid liquefaction of components).

20. Process according to Claim 17 or 18, **characterized in that** the mixing step is divided into the following steps:
intensive mixing of fibers and IR opacifier,
intensive mixing-in of the silica and the remaining components (optionally with cooling so as to avoid liquefaction of components).

21. Process according to any of Claims 17 to 20, **characterized in that** foamed or expanded powders are gently mixed in in a last step.

22. Process according to any of Claims 17 to 21, **characterized in that** mixing is followed by a compaction step by means of pressing.

23. Process according to Claim 22, **characterized in that** the temperature is increased immediately before or directly after pressing and the last process step is cooling to room temperature.

24. Process according to Claim 22 or 23, **characterized in that** the resulting shaped body is sprayed with a hydrophobicizing reagent or is dipped into such a reagent.

## Revendications

1. Mélange pulvérulent pour isolation thermique, qui présente une densité apparente selon DIN ISO 697 et EN ISO 60 de 20 - 60 g/l et qui contient au moins une silice ayant une surface BET selon DIN ISO 9277 de 130 - 1 200 m²/g et ayant une valeur D(50) inférieure à 60 µm et au moins une matière fibreuse ayant un diamètre de fibre de 1 - 50 µm.

2. Mélange pulvérulent pour isolation thermique selon la revendication 1, **caractérisé en ce que** la silice est une silice pyrogénée.

3. Mélange pulvérulent pour isolation thermique selon la revendication 1 et la revendication 2, **caractérisé en ce qu'**il contient au moins 15 % en poids d'une silice hydrophobe ayant une teneur en carbone d'au moins 1 % en poids.

4. Mélange pulvérulent pour isolation thermique selon la revendication 1 et la revendication 2, **caractérisé en ce qu'**il comporte au moins un agent d'hydrophobisation choisi dans la série résine silicone, composé fluorocarbone et carbone en une quantité de 1 - 30 % en poids.

5. Mélange pulvérulent pour isolation thermique selon les revendications 1 à 4, **caractérisé en ce qu'**il contient un opacifiant aux infrarouges.

6. Mélange pulvérulent pour isolation thermique selon les revendications 1 à 5, **caractérisé en ce qu'**il présente une densité apparente selon DIN ISO 697 et EN ISO 60 de 20 - 40 g/l.

7. Mélange pulvérulent pour isolation thermique selon les revendications 1 à 6, **caractérisé en ce qu'**il contient de la poudre expansée ou soufflée.

8. Mélange pulvérulent pour isolation thermique selon une ou plusieurs des revendications précédentes, **caractérisé en ce qu'**il présente différentes couches tassées.

9. Corps moulé pour isolation thermique à base d'un mélange pulvérulent pour isolation thermique selon une ou plusieurs des revendications précédentes, **caractérisé en ce qu'**il présente une densité selon DIN ISO 697 et EN ISO 60 de 70 - 350 g/l.

10. Corps moulé pour isolation thermique selon la revendication 9, **caractérisé en ce qu'**il présente une densité de 70 - 120 g/l.

11. Corps moulé pour isolation thermique selon la revendication 9 et la revendication 10, **caractérisé en ce qu'**il présente une conductivité de 12 - 35 mW/mK, mesurée selon EN 12667, EN 1946-3 et ISO 8301.

12. Corps moulé pour isolation thermique selon la revendication 9 et la revendication 10, **caractérisé en ce qu'**il présente une conductivité de 12 - 24 mW/mK, mesurée selon EN 12667, EN 1946-3 et ISO 8301.

13. Corps moulé pour isolation thermique selon une ou plusieurs des revendications 9 à 12, **caractérisé en ce qu'**il présente une grande hydrophobie et une faible absorption d'eau selon DIN EN 12087.

14. Isolation thermique à structure stratifiée, **caractérisée en ce qu'**elle comporte 2 à 20 couches isolantes contiguës, dont au moins une couche isolante traditionnelle est choisie dans le groupe constitué par
- un lit d'une matière inorganique expansée ou soufflée, telle que la perlite, la vermiculite, l'argile soufflée ou le mica soufflé, dont la cohésion est assurée par un liant
- une plaque d'isolant organique, tel que du polystyrène expansé, du Neopor, du résol ou du polyuréthane
- une plaque d'isolant à base de matière isolante inorganique poreuse, telle que la silice pyrogénée, additionnée d'opacifiant aux infrarouges et de fibres de verre
- un non-tissé de fibres avec ou sans imprégnation avec de la silice,
et l'isolation thermique à structure stratifiée comporte au moins une nouvelle couche isolante conforme à un corps moulé pour isolation thermique selon une ou plusieurs des revendications 8 à 12.

15. Isolation thermique à structure stratifiée selon la revendication 14, dans laquelle l'épaisseur des couches vaut de 0,5 mm à 15 cm.

16. Utilisation de l'isolation thermique selon une ou plusieurs des revendications précédentes dans un panneau d'isolation sous vide (PIV) ou, en raison de son hydrophobie, son utilisation dans des briques creuses de construction, des éléments de construction multicoques, des ouvrages de maçonnerie à double paroi ou un système composite d'isolation thermique (SCIT).

17. Procédé pour la production d'un mélange pulvérulent pour isolation thermique, **caractérisé en ce qu'**on mélange sous de grandes forces de cisaillement au moins une silice ayant une surface BET selon DIN ISO 9277 de 130 - 1 200 [m²/g] et au moins une matière fibreuse ayant un diamètre de fibre de 1 - 50 µm.

18. Procédé selon la revendication 17, **caractérisé en ce qu'**on disperse au préalable énergiquement la silice.

19. Procédé selon la revendication 17 et la revendication 18, **caractérisé en ce que** l'étape de mélange se divise en les étapes suivantes :
mélange intense des fibres et d'une partie de la silice,
incorporation par mélange intense de la silice restante et des composants restants (éventuellement avec refroidissement pour éviter la liquéfaction de composants).

20. Procédé selon la revendication 17 et la revendication 18, **caractérisé en ce que** l'étape de mélange se divise en les étapes suivantes :
mélange intense des fibres et de l'opacifiant aux infrarouges,
incorporation par mélange intense de la silice et des composants restants (éventuellement avec refroidissement pour éviter la liquéfaction de composants).

21. Procédé selon les revendications 17 à 20, caractérisé en ce dans une dernière étape on ajoute avec précaution des poudres expansées ou soufflées.

22. Procédé selon les revendications 17 à 21, **caractérisé en ce qu'**après le mélange on effectue encore une étape de compactage par pressage.

23. Procédé selon la revendication 22, **caractérisé en ce qu'**immédiatement avant ou directement après le pressage on effectue une élévation de température et la dernière étape du procédé est un refroidissement jusqu'à la température ambiante.

24. Procédé selon la revendication 22 ou la revendication 23, **caractérisé en ce qu'**on pulvérise sur le corps moulé résultant un réactif à action hydrophobe ou on le trempe dans un tel réactif.
